# EUROPÄISCHE PATENTSCHRIFT

(11) **EP 2 216 205 B1**
(45) Veröffentlichungstag und Bekanntmachung des Hinweises auf die Patenterteilung: **30.10.2013**
(21) Anmeldenummer: 10152670.5
(22) Anmeldetag: 04.02.2010
(51) Int. Cl.: B60R 9/045

(54) **Dachlastenträger für Kraftfahrzeuge**
Roof carrier for motor vehicles
Galerie pour véhicules automobiles

(30) Priorität: 05.02.2009 DE 102009007742
(43) Veröffentlichungstag der Anmeldung: 11.08.2010
(73) Patentinhaber: JAC Products Europe GmbH, 42285 Wuppertal (DE)
(72) Erfinder: Rothstein, Reinhold, 42279, Wuppertal (DE); Adamo, Filippo, 42289, Wuppertal (DE); Böcker, Frank, 58089, Hagen (DE)
(74) Vertreter: Christophersen & Partner

(56) Entgegenhaltungen:
- EP-A1- 1 688 304
- WO-A1-96/17751
- WO-A1-97/48574
- DE-A1- 4 315 024
- US-A- 4 487 348
- US-A- 6 015 075
- US-A- 6 102 265

## Beschreibung

Die Erfindung betrifft einen Dachlastenträger für Kraftfahrzeuge mit zu beiden Seiten längs des Fahrzeugdachs dachfest angeordneten Längsträgern, mit einem sich zwischen den Längsträgern erstreckenden Querträger, der sich aus einem Profilrohr und an dessen Enden angeordneten Stützfüßen zusammensetzt, wobei jeder Stützfuß mit einem daran in einem Schwenkgelenk gelagerten Riegel zur lösbaren Befestigung des Stützfußes an dem jeweiligen Längsträger versehen ist, und wobei der Riegel zweiarmig ausgebildet ist mit einem ersten Hebelarm, an dessen Ende ein Riegelabschnitt ausgebildet ist, mit dem der Riegel in einer nach unten offenen Nut des Längsträgers verriegelbar ist, und einem im Bereich des Schwenkgelenks starr mit dem ersten Hebelarm verbundenen zweiten Hebelarm.

Bei modernen Kraftfahrzeugen erfolgt die Befestigung von Dachlastenträgern an einer Dachreling, also an zwei sich in Fahrzeuglängsrichtung erstreckenden Profilen, welche entweder, wie z. B. in der DE 43 15 024 A1 beschrieben, einen gewissen Abstand zur Außenseite des Fahrzeugdachs aufweisen, oder aber wie z. B. in der DE 101 05 167 B4 beschrieben, abstandslos direkt auf der Dachaußenseite befestigt oder im Blech der Dachhaut sogleich mit angeformt sind. Bei dieser zweiten Bauart können an der Innenseite der Profile an bestimmten Längspositionen Bohrungen vorhanden sein, in die bei der Montage des Querträgers Rastnocken formschlüssig eingreifen, die an den Stützfüßen des Querträgers angeformt sind. Es kommt auf diese Weise zu einem Formschluss des Querträgers auch in Fahrzeuglängsrichtung.

Bei dem Dachlastenträger nach der PCT WO 96/17751 A1 befindet sich ein solcher, in Öffnungen der Dachreling eingreifender Nocken an einem schwenkbar am Stützfuß des Querträgers gelagerten, zweiarmigen Riegel, dessen zweiter Hebelarm als Handgriff gestaltet ist. Auch diese Lösung arbeitet mit einem Formschluss des Querträgers auch in Fahrzeuglängsrichtung.

Anstelle der formschlüssigen Verbindung mit Bohrungen und Rastnocken sind auch Lösungen bekannt, bei denen der Querträger in Gewindeaufnahmen in dem Längsträgerprofil festgeschraubt wird. Nachteilig bei diesen Lösungen ist, dass die Bohrungen bzw. Gewindeaufnahmen zur Geräuschentwicklung beitragen können, und sie im Winter zur Vereisung neigen. Auch kann der Querträger nur an jenen Positionen in Fahrzeuglängsrichtung montiert werden kann, an denen sich die Bohrungen bzw. Gewindeaufnahmen befinden.

Ferner bekannt sind Längsträgerprofile, die an ihrer zur Fahrzeugmitte gelegenen Innenseite eine Nut aufweisen, in welcher sich der Stützfuß des Querträgers verklemmen lässt. Bei dieser Bauart lässt sich zwar der Querträger in beliebigen Längspositionen des Fahrzeugs fixieren, jedoch bereitet das vollständige Entfernen des Querträgers Probleme, weshalb dieser permanent am Fahrzeug verbleibt, was sich negativ auf den Windwiderstand und damit den Kraftstoffverbrauch des Fahrzeugs auswirkt.

Mit der Erfindung soll eine Vereinfachung der Montage und Demontage des Querträgers bei Dachträgersystemen erreicht werden. Ein Versetzen des Querträgers zwischen einer vorderen und einer hinteren Position oder umgekehrt soll möglich sein, ohne neben der Ent-und Wiederverriegelung an den Längsträgern weitere Löse- oder Befestigungsschritte durchführen zu müssen.

Zur Lösung wird ein Dachlastenträger für Kraftfahrzeuge mit den eingangs angegebenen Merkmalen vorgeschlagen, bei dem an dem zweiten Hebelarm ein hinsichtlich seiner wirksamen Länge veränderliches Zugelement angreift, welches sich bis zu einem in dem Profilrohr angeordneten Widerlager erstreckt.

Bei einem solchen Dachlastenträger für Kraftfahrzeuge ist ein Versetzen des Querträgers zwischen einer vorderen und einer hinteren Position oder umgekehrt möglich, ohne dass zusätzlich zu dem Lösen und Wiederverriegeln an den Längsträgern noch weitere Löse- oder Befestigungsschritte durchgeführt werden müssen. Die Fixierung des jeweiligen Stützfußes erfolgt mittels eines einzigen Riegels, welcher mit einem an seinem einen Ende ausgebildeten Riegelabschnitt in einer nach unten offenen Nut des Längsträgers verriegelbar ist, und so sowohl für eine ausreichende Sicherung des Querträgers in Fahrzeuglängsrichtung wie auch in Querrichtung, d. h. in Längsrichtung des Querträgers, sorgt.

Der Riegel ist von zweiarmiger Bauart mit einem ersten Hebelarm, an dem sich der Riegelabschnitt befindet, und einem im Bereich des Schwenkgelenks starr mit dem ersten Hebelarm verbundenen zweiten Hebelarm. An dem zweiten Hebelarm greift ein hinsichtlich seiner wirksamen Länge veränderliches Zugelement an, z. B. eine lange Schraube bzw. eine Gewindestange. Das Zugelement erstreckt sich von dem zweiten Hebelarm bis zu einem in dem Profilrohr angeordneten Widerlager.

Von Vorteil ist es, dieses Widerlager des Zugelements längsverschieblich in einem Längskanal des Profilrohrs anzuordnen. Eine solche Ausgestaltung ermöglicht eine Vereinfachung der Fixierung des Querträgers auch bei solchen Dachträgersystemen, deren Längsträger in Fahrzeuglängsrichtung einen sich verändernden Abstand zueinander aufweisen. Denn bei vielen modernen Fahrzeugen verlaufen infolge der Anforderungen modernen Karosseriedesigns die beiden Relingprofile nicht genau parallel zueinander, vielmehr sind Pkw-Fahrzeugdächer häufig nach hinten leicht verjüngend gestaltet, weshalb auch die beidseitig angeordneten Relingprofile dieser Gestaltung folgen und sich ihr Abstand nach fahrzeughinten verringert. Durch die Längsverschieblichkeit des Widerlagers innerhalb des Profilrohrs ist nunmehr auch in diesen Fällen ein vereinfachtes Versetzen des Querträgers zwischen einer vorderen und einer hinteren Position oder umgekehrt möglich. In einem einzigen Schritt wird sowohl die Auszugslänge des Querträgers fixiert, als auch der Querträger an dem jeweiligen Längsträger verriegelt. Umgekehrt lässt sich in einem einzigen Schritt sowohl die Verriegelung des Stützfußes an dem Längsträger, als auch die Einstellung der Länge des Querträgers aufheben. Ist dies geschehen, lassen sich die Stützfüße wieder längs des Profilrohrs verschieben.

Bei einer Ausgestaltung der vorgenannten Ausführungsform ist ein Klemmelement gemeinsam mit dem Widerlager längsverschieblich in dem Längskanal angeordnet, wobei das Klemmelement infolge der in dem Zugelement, also z. B. der Schraube, wirkenden Zugkraft gegen das Profilrohr anpresspar ist. So kann das Klemmelement z. B. als Stauchkörper aus einem elastischen Material gestaltet sein, dessen Querschnitt im Wesentlichen gleich dem Innenquerschnitt des umgebenden Längskanals ist.

Mit einer weiteren Ausgestaltung wird vorgeschlagen, dass das Klemmelement zusammenpressbar zwischen dem Widerlager und einer Lasche angeordnet ist, welche Bestandteil des Stützfußes ist und sich quer zu dem Längskanal in diesen hinein erstreckt.

Damit, unabhängig von der Auszugslänge des Querträgers, der Stützfuß mit dem Profilrohr verbunden bleibt, wird mit einer Ausgestaltung vorgeschlagen, dass die Kontur des in den Längskanal ragenden Teils der Lasche im Wesentlichen gleich dem Innenquerschnitt des Längskanals ist. Vorzugsweise ist die Kontur der Lasche T-förmig, und die größte Breite der Kontur ist größer als die Breite einer Öffnung des Längskanals, durch welche hindurch sich die Lasche in den Längskanal hinein erstreckt.

Das Zugelement, welches sich an seinem einen Ende gegen den Riegel und an seinem anderen Ende gegen das Widerlager abstützt, ist vorzugsweise eine Schraube. Damit diese zur Betätigung mit einem üblichen Schraubenschlüssel erreichbar ist, sollte die gedachte Verlängerung der Schraubenachse den dachfest angeordneten Längsträger in einer Höhe oberhalb des Längsträgers kreuzen.

Anstelle einer langen Schraube können aber auch anderweitig gestaltete Zugelemente zum Einsatz kommen, z. B. Exzenter, Kniehebel oder Klemmhebel.

Schließlich wird mit einer weiteren Ausgestaltung vorgeschlagen, dass der Stützfuß im Schwenkbereich des Riegelabschnitts mit einer Ausnehmung für den Riegelabschnitt versehen ist, die breiter als der Riegelabschnitt ist und somit Platz für ein Verschwenken des Riegelabschnitts bietet. Dies ermöglicht eine schlanke Bauweise der in das Nutprofil des Längsträgers hineinragenden und darin formschlüssig verriegelbaren Elemente. Insbesondere lassen sich die in dem Nutprofil verriegelbaren Elemente in eine sehr schmale Anordnung bringen, so dass ein seitliches Einsetzen und wieder Herausnehmen in und aus der Öffnung der Nut möglich ist. Umgekehrt lässt sich diese Nut besonders klein mit geringer Öffnungsweite gestalten, gleichwohl ist der Stützfuß sicher in dieser schmalen Nut verriegelbar.

Weitere Vorteile und Einzelheiten ergeben sich aus der nachfolgenden Beschreibung eines auf der Zeichnung dargestellten Ausführungsbeispiels. Im Einzelnen zeigen:
- Fig. 1: in einem Schnitt quer zur Fahrzeuglängsrichtung einen Dachlastenträger für ein Fahrzeugdach, wobei von dem Dachlastenträger nur dessen einer Endbereich dargestellt ist, und wobei der Querträger in entriegeltem Zustand wiedergegeben ist;
- Fig. 2: die Gegenstände nach Fig. 1 in verriegeltem Zustand und
- Fig. 3: einen Teilschnitt durch die in Fig. 2 mit III bezeichnete Schnittebene.

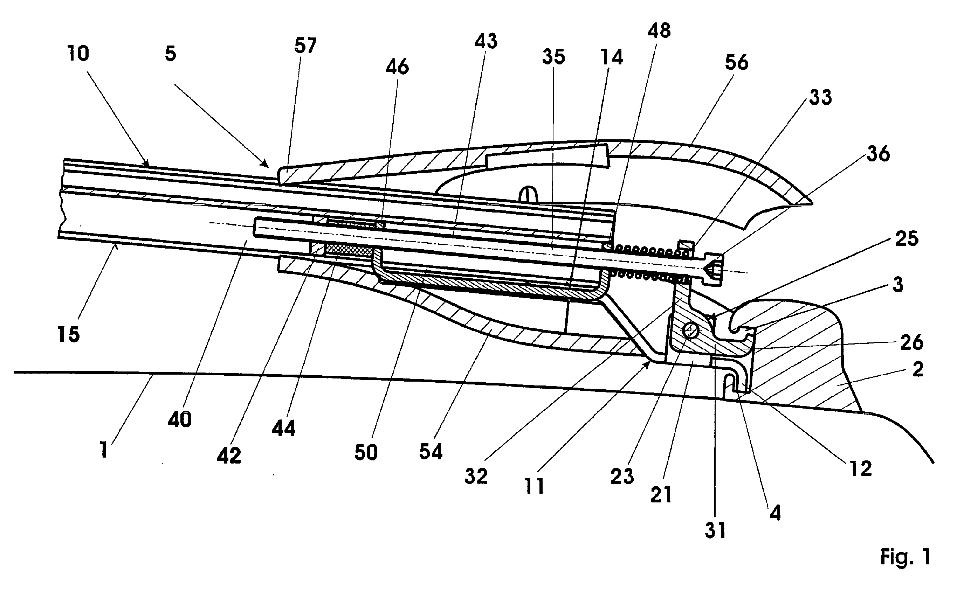

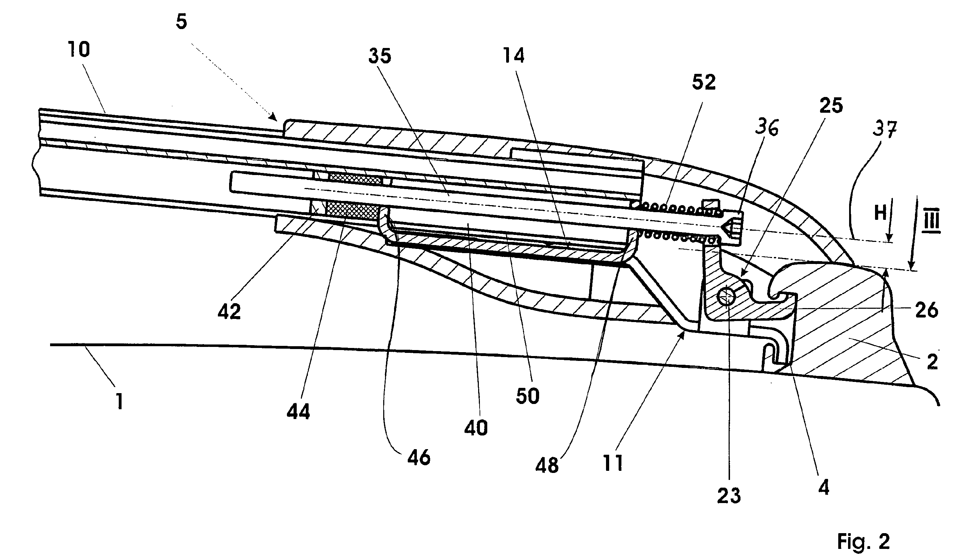

Die Figuren 1 und 2 zeigen einen Schnitt durch ein Fahrzeugdach 1 mit einem entlang dessen Außenrand angeordneten Längsträger. Der Längsträger 2 ist hier ein separates Relingprofil einer Dachreling, jedoch kann die Gestaltung des Längsträgers auch Bestandteil der Gestaltung des Fahrzeugdachs 1 selbst sein. Der Längsträger 2 ist an seiner zur Fahrzeugmitte gerichteten Innenseite mit einem insgesamt im Querschnitt C-förmig gestalteten Nutprofil versehen, d. h. einem Nutprofil, dessen Nutboden breiter als die nach fahrzeuginnen weisende Nutöffnung ist. Bei genauer Betrachtung definiert das Nutprofil zwei kanalförmige Nuten, nämlich oben eine nach unten offene Nut 3, und unten eine nach oben offene Nut 4. Die Nuten 3, 4 liegen sich einander vertikal gegenüber und dienen dem formschlüssigen Verriegeln eines im Folgenden näher beschriebenen Querträgers 5.

Der Querträger 5 setzt sich aus einem von der einen bis zur anderen Fahrzeugseite reichenden Profilrohr 10, sowie aus Stützfüßen 11 im Bereich beider Enden des Profilrohrs 10 zusammen. Die Stützfüße 11 sind längsverschieblich zu dem Profilrohr 10.

Die Figuren 1 und 2 zeigen jeweils nur das eine Ende des Querträgers und daher auch nur einen Stützfuß 11. Der im Bereich des anderen Endes angeordnete Stützfuß ist jedoch symmetrisch aufgebaut und auch im Übrigen analog gestaltet.

Fahrzeugaußen endet der Stützfuß 11 in einer kurzen, nach unten gerichteten Abwinklung 12. Mit dieser Abwinklung 12 stützt er sich in der unteren Nut 4 des Nutprofils ab, was zu einer eindeutigen, formschlüssigen Lagesicherung des Stützfußes 11 in Längsrichtung des Querträgers führt. Nach fahrzeuginnen weist der Stützfuß 11 eine Auflagefläche 14 auf, die sich über eine gewisse Länge entlang des Profilrohrs 10 erstreckt, und auf der das Profilrohr 10 mit seiner Unterseite 15 aufliegt. Die Figuren lassen erkennen, dass beim Ausführungsbeispiel der Stützfuß 11 aus einem durch Stanzen und Biegen geformten Stück Metallblech besteht, was die Herstellungskosten für den Stützfuß 11 gering hält.

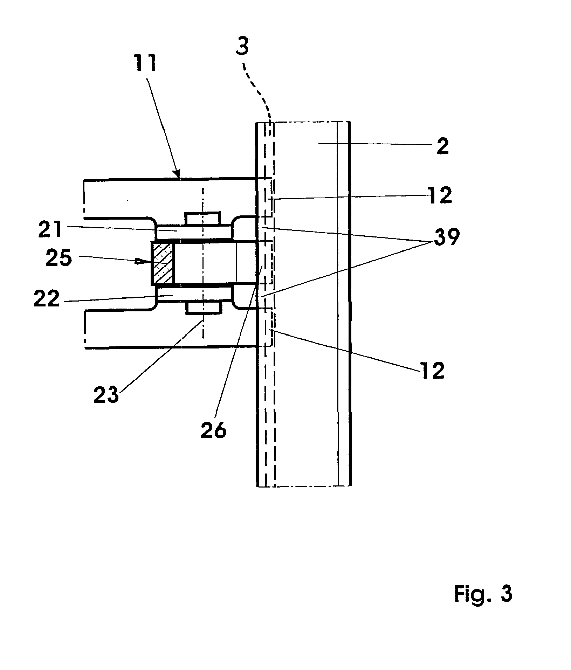

Gemäß Fig. 3 sind an dem Stützfuß 11 durch Umformen zwei parallel zueinander angeordnete Laschen 21, 22 ausgebildet, die gemeinsam die Achse eines Schwenkgelenks 23 halten. Die Achse des Schwenkgelenks 23 erstreckt sich parallel zu dem Längsträger 2. Sie befindet sich ortsfest an dem Stützfuß 11 und lagert einen schwenkbaren Riegel 25. Dieser ist als zweiarmiger Winkelhebel gestaltet, dessen erster Hebelarm 31 den eigentlichen Riegelabschnitt 26 bildet. Der Riegelabschnitt 26 ist als nach oben abgewinkelter Haken gestaltet. Aufgrund dieser Gestaltung ist der Riegelabschnitt 26 in die obere Nut 3 des Nutprofils einschwenkbar. Insbesondere ist der Riegelabschnitt 26 entgegengesetzt und spiegelbildlich zu den Abwinklungen 12 des Stützfußes 11 gestaltet, und er weist dieselben Formschlusseigenschaften auf.

Der zweite Hebelarm 32 des an dem Stützfuß gelagerten Riegels 25 erstreckt sich im Wesentlichen vertikal und ist nahe seines Endes mit einer Öffnung 33 versehen. Durch die Öffnung 33 tritt ein Zugelement 35 in Gestalt einer langgestreckten Schraube oder eines langgestreckten Gewindestabs hindurch. Der zweite Hebelarm 32 erstreckt sich im Wesentlichen rechtwinklig zu dem Zugelement 35. Außen ist das Zugelement 35 mit einem Betätigungselement versehen. Als Betätigungselement dient hier ein Schraubenkopf 36 mit Schlüsselflächen, hier als Innensechskant, ausgebildet. Der Durchmesser des Betätigungselements 36 ist größer als der Durchmesser der Öffnung 33 in dem Riegel 25, so dass der Riegel 25 beim Drehen der Schraube mitgenommen und um das Schwenkelement 23 entgegen dem Uhrzeigersinn verschwenkt wird, wodurch der hakenförmige Riegelabschnitt 26 nach oben in die Nut 3 gelangt und darin formschlüssig verriegelt. Diese Wirkung bei Betätigung des schraubenförmigen Zugelements 35 zeigt der Vergleich der Fig. 1 mit der Fig. 2.

Damit der Schraubenkopf 36 mittels eines Werkzeuges von außen her erreichbar ist, kreuzt die gedachte Verlängerung 37 der Schraubenachse den dachfest angeordneten Längsträger 2 in einer Höhe H deutlich oberhalb des Längsträgers 2.

Fig. 3 lässt erkennen, dass sich der Stützfuß 11 im Bereich der Schwenklagerung des Riegels 25 in zwei Hälften teilt, zwischen denen sich eine Öffnung oder Ausnehmung 39 befindet. Beidseits der Ausnehmung 39 sind die beiden bereits beschriebenen Laschen 21, 22 angeordnet. Auf diese Weise befindet sich der von den Laschen 21, 22 getragene Riegel 25 in der Ausnehmung 39 mit der Folge, dass sich in der Entriegelungsposition eine minimale Bauhöhe beider Verriegelungsstrukturen zusammen, d. h. der Abwinklung 12 und des Riegelabschnitts 26, ergibt. Damit ist zur Montage und Demontage des Querträgers ein Einsetzen in das Nutprofil bzw. Herausnehmen aus dem Nutprofil von der Seite her möglich, ohne dass es zu einem Verhaken kommt. Zugleich kann, da der Riegelabschnitt 26 in die Ausnehmung 39 zwischen den Abwinklungen 12 eintauchen kann, bereits eine geringe Öffnungsweite des C-förmig gestalteten Nutprofils ausreichen, um den Querträger 5 von innen her sicher an dem Längsträger 2 zu befestigen.

Das Zugelement 35 erstreckt sich, ausgehend von dem außen liegenden Betätigungselement 36, nach fahrzeuginnen bis in einen nach unten offenen Längskanal 40 des Profilrohrs 10 hinein. Dort befindet sich ein in dem Längskanal 40 längsverschiebliches Widerlager 42 des Zugelements 35. Das Widerlager 42 ist bei dem hier dargestellten Ausführungsbeispiel eine auf dem Gewinde 43 der Schraube 35 verdrehbare Gewindescheibe 42. Deren Kontur ist so an die Kontur der Innenwandung des Längskanals 40 angepasst, dass das Widerlager 42 zwar längsbeweglich in dem Längskanal geführt ist, jedoch auch unverdrehbar. Durch Anziehen der Schraube 35 schraubt sich die das Widerlager 42 bildende Gewindescheibe auf dem Gewinde 43 zunehmend in Richtung nach fahrzeugaußen, und übt hierbei eine zunehmende Druckkraft auf ein Klemmelement 44 aus. Nach fahrzeugaußen stützt sich dieses Klemmelement 44 an einer Lasche 46 ab, die starrer Bestandteil des Stützfußes 11 ist. Das Klemmelement 44 ist ein elastischer Stauchkörper, dessen normaler Querschnitt im Wesentlichen gleich oder geringer dem Innenquerschnitt des umgebenden Längskanals 40 ist. Bewegt sich die Gewindescheibe 42 nach fahrzeugaußen, führt dies zu einer Längskomprimierung des elastischen Klemmelements 44 zwischen Gewindescheibe 42 und Lasche 46, wodurch das Klemmelement 44, gezwungen wird, zugleich radial zu expandieren. Die Expansion führt zu einer Klemmkraft auf die Innenwandung des umgebenden Längskanals 40 des Profilrohrs 10, und damit zu einer gegenseitigen Klemmfixierung von Profilrohr 10 und Stützfuß 11.

Die Lasche 46 des Stützfußes 11, an der sich das Klemmelement 44 abstützt, ist T-förmig gestaltet, wobei die größte Breite der T-Form größer ist als die Öffnungsweite der Öffnung 50 in der Unterseite 15 des Profilrohrs 10, durch welche Öffnung 50 hindurch sich die Lasche 46 in den Längskanal 40 hinein erstreckt. Durch diese Dimensionierung der nach unten offenen Öffnung 50 des Längskanals und der Lasche 46 des Stützfußes ist sichergestellt, dass Profilrohr 10 und Stützfuß 11 unverlierbar zueinander längsgeführt sind. Hierzu trägt zusätzlich eine weitere Lasche 48 des Stützfußes 11 bei, die sich nahe des Endes des Profilrohrs 10 in dessen Längskanal 40 hinein erstreckt. Die weitere Lasche 48 ist gleichartig der Lasche 46 gestaltet, und ebenfalls starrer Bestandteil des Stützfußes 11. Fertigungstechnisch ist es von Vorteil, dass beide Laschen 46, 48 durch entsprechende Biegeverformung des Metallblechs hergestellt sind, aus dem der Stützfuß 11 besteht.

Die als Zugelement dienende Schraube 35 durchsetzt sowohl die beiden Laschen 46, 48, als auch das verformbare Klemmelement 44, wozu diese Teile mit glatten Durchgangsöffnungen für die Schraube 35 versehen sind.

Eine Druckfeder 52 stützt sich einerseits gegen die Lasche 48 des Stützfußes, und andererseits gegen den Hebelarm 32 des Riegels 25 ab, wobei die Feder 52 den entsprechenden Längsabschnitt des Zugelements 35 umgibt. In der Lösestellung der Verriegelung führt die Druckfeder 52 dazu, dass sich der Riegelabschnitt 26 des Riegels selbsttätig absenkt, so dass sich der Querträger ohne die Gefahr eines Verhakens an die Längsträger 2 ansetzen bzw. von den Längsträgern 2 abnehmen lässt. Dies gelingt, indem der gesamte Querträger 5 übergangsweise schräg gehalten wird.

Der Bereich des Stützfußes 11 ist nach unten zu dem Fahrzeugdach 1 hin durch eine untere Schale 54, und nach oben hin durch eine obere, verschließbare Schale 56 abgedeckt. Die obere Schale 56 ist um den Ort 57 nach oben verschwenkbar und in dieser Stellung (Fig. 1) arretierbar, um an den Schraubenkopf 36 zu gelangen. In ihrer unteren Stellung ist sie mittels eines Zylinderschlosses verschließbar.

### Bezugszeichenliste

- 1: Fahrzeugdach
- 2: Längsträger
- 3: Nut
- 4: Nut
- 5: Querträger
- 10: Profilrohr
- 11: Stützfuß
- 12: Abwinklung
- 14: Auflagefläche
- 15: Unterseite
- 21: Lasche
- 22: Lasche
- 23: Schwenkgelenk
- 25: Riegel
- 26: Riegelabschnitt
- 31: erster Hebelarm des Riegels
- 32: zweiter Hebelarm des Riegels
- 33: Öffnung
- 35: Schraube, Zugelement
- 36: Schraubenkopf, Betätigungselement
- 37: Verlängerung der Schraubenachse
- 39: Ausnehmung
- 40: Längskanal
- 42: Gewindescheibe, Widerlager
- 43: Gewinde
- 44: Klemmelement
- 46: Lasche
- 48: Lasche
- 50: Öffnung
- 52: Druckfeder
- 54: Untere Schale
- 56: Obere Schale
- 57: Ort
- H: Höhe

## Patentansprüche

1. Dachlastenträger für Kraftfahrzeuge mit zu beiden Seiten längs des Fahrzeugdachs dachfest angeordneten Längsträgern, mit einem sich zwischen den Längsträgern (2) erstreckenden Querträger (5), der sich aus einem Profilrohr (10) und an dessen Enden angeordneten Stützfüßen (11) zusammensetzt, wobei jeder Stützfuß (11) mit einem daran in einem Schwenkgelenk (23) gelagerten Riegel (25) zur lösbaren Befestigung des Stützfußes (11) an dem jeweiligen Längsträger (2) versehen ist, und wobei der Riegel (25) zweiarmig ausgebildet ist mit einem ersten Hebelarm (31), an dessen Ende ein Riegelabschnitt (26) ausgebildet ist, mit dem der Riegel (25) in einer nach unten offenen Nut (3) des Längsträgers (2) verriegelbar ist, und einem im Bereich des Schwenkgelenks (23) starr mit dem ersten Hebelarm verbundenen zweiten Hebelarm (32),
**dadurch gekennzeichnet,**
**dass** an dem zweiten Hebelarm (32) ein hinsichtlich seiner wirksamen Länge veränderliches Zugelement (35) angreift, welches sich bis zu einem in dem Profilrohr (10) angeordneten Widerlager (42) erstreckt.

2. Dachlastenträger nach Anspruch 1, **gekennzeichnet durch** eine **durch** den Riegel (25) hindurchführende Schraube (35) zum Verschwenken des Riegels (25) um das Schwenkgelenk (23).

3. Dachlastenträger nach Anspruch 2, **dadurch gekennzeichnet, dass** die Schraube (35) zum Verriegeln des Riegelabschnitts (26) auf Zug arbeitet, und dass das Widerlager (42) der Schraube (35) in dem Profilrohr (10) angeordnet ist.

4. Dachlastenträger nach Anspruch 1, **dadurch gekennzeichnet, dass** das Widerlager (42) des Zugelements (35) längsverschieblich in einem Längskanal (40) des Profilrohrs (10) angeordnet ist.

5. Dachlastenträger nach Anspruch 4, **gekennzeichnet durch** ein gemeinsam mit dem Widerlager (42) längsverschieblich in dem Längskanal (40) angeordnetes Klemmelement (44), welches infolge der in dem Zugelement (35) wirkenden Zugkraft gegen das Profilrohr (10) anpressbar ist.

6. Dachlastenträger nach Anspruch 5, **dadurch gekennzeichnet, dass** das Klemmelement (44) ein Stauchkörper aus einem elastischen Material ist, dessen Querschnitt im Wesentlichen gleich dem Innenquerschnitt des umgebenden Längskanals (40) ist.

7. Dachlastenträger nach Anspruch 5 oder 6, **dadurch gekennzeichnet, dass** das Zugelement (35) durch das Klemmelement (44) hindurchführt.

8. Dachlastenträger nach einem der Ansprüche 5 bis 7, **dadurch gekennzeichnet, dass** das Klemmelement (44) zusammenpressbar zwischen dem Widerlager (42) und einer Lasche (46) angeordnet ist, welche Bestandteil des Stützfußes (11) ist und sich quer zu dem Längskanal (40) in diesen hinein erstreckt.

9. Dachlastenträger nach Anspruch 8, **dadurch gekennzeichnet, dass** die Kontur des in den Längskanal (40) ragenden Teils der Lasche (46) im Wesentlichen gleich dem Innenquerschnitt des Längskanals (40) ist.

10. Dachlastenträger nach Anspruch 7 oder 8, **dadurch gekennzeichnet, dass** die Kontur der Lasche (46) T-förmig ist, und dass die größte Breite der Kontur größer ist als die Breite einer Öffnung (50) des Längskanals (40), durch welche hindurch sich die Lasche (46) in den Längskanal (40) hinein erstreckt.

11. Dachlastenträger nach einem der Ansprüche 8 bis 10, **dadurch gekennzeichnet, dass** das Zugelement (35) durch die Lasche (46) hindurchführt.

12. Dachlastenträger nach einem der Ansprüche 8 bis 11, **gekennzeichnet durch** eine zu der Lasche (46) in Längsrichtung versetzt angeordnete, weitere Lasche (48), die ebenfalls Bestandteil des Stützfußes (11) ist, und **durch** die das Zugelement (35) hindurchführt.

13. Dachlastenträger nach einem der Ansprüche 1 bis 12, **dadurch gekennzeichnet, dass** das Zugelement (35) eine an ihrem einen Ende gegen den Riegel (25) und an ihrem anderen Ende gegen das Widerlager (42) abgestützte Schraube ist, wobei die gedachte Verlängerung (37) der Schraubenachse den dachfest angeordneten Längsträger (2) in einer Höhe (H) oberhalb des Längsträgers (2) kreuzt.

14. Dachlastenträger nach einem der vorangehenden Ansprüche, **dadurch gekennzeichnet, dass** der Stützfuß (11) im Schwenkbereich des Riegelabschnitts (26) mit einer Ausnehmung (39) versehen ist, die in Fahrzeuglängsrichtung breiter als der Riegelabschnitt (26) ist und in die der Riegelabschnitt (26) eintauchen kann.

## Claims

1. Roof carrier for motor vehicles, with longitudinal members arranged on both sides along the vehicle roof in a manner mounted on the roof, with a crossmember (5) which extends between the longitudinal members (2) and is composed of a shaped tube (10) and supporting feet (11) arranged at the ends of the latter, wherein each supporting foot (11) is provided with a bolt (25), which is mounted thereon in a pivot joint (23), for releasably fastening the supporting foot (11) to the respective longitudinal member (2), and wherein the bolt (25) is of two-armed design, with a first lever arm (31), at the end of which a locking section (26) is formed and can be used to lock the bolt (25) in a downwardly open groove (3) of the longitudinal member (2), and with a second lever arm (32) which is connected rigidly to the first lever arm in the region of the pivot joint (23), **characterized in that** a tension element (35) which is variable in respect of its effective length and extends as far as an abutment (42) arranged in the shaped tube (10) acts on the second lever arm (32).

2. Roof carrier according to Claim 1, **characterized by** a screw (35) passing through the bolt (25) in order to pivot the bolt (25) about the pivot joint (23).

3. Roof carrier according to Claim 2, **characterized in that** the screw (35) operates under tension in order to lock the locking section (26), and **in that** the abutment (42) of the screw (35) is arranged in the shaped tube (10).

4. Roof carrier according to Claim 1, **characterized in that** the abutment (42) of the tension element (35) is arranged in a longitudinally displaceable manner in a longitudinal channel (40) of the shaped tube (10).

5. Roof carrier according to Claim 4, **characterized by** a clamping element (44) which is arranged together with the abutment (42) in a longitudinally displaceable manner in the longitudinal channel (40) and which is pressable against the shaped tube (10) as a result of the tensile force acting is the tension element (35).

6. Roof carrier according to Claim 5, **characterized in that** the clamping element (44) is a compressive body made of an elastic material, the cross section of which is substantially identical to the internal cross section of the surrounding longitudinal channel (40).

7. Roof carrier according to Claim 5 or 6, **characterized in that** the tension element (35) passes through the clamping element (44).

8. Roof carrier according to one of Claims 5 to 7, **characterized in that** the clamping element (44) is arranged compressibly between the abutment (42) and a tab (46) which is part of the supporting foot (11) and extends into the longitudinal channel (40) transversely with respect thereto.

9. Roof carrier according to Claim 8, **characterized in that** the contour of that part of the tab (46) which projects into the longitudinal channel (40) is substantially identical to the internal cross section of the longitudinal channel (40).

10. Roof carrier according to Claim 7 or 8, **characterized in that** the contour of the tab (46) is T-shaped, and **in that** the greatest width of the contour is larger than the width of an opening (50) in the longitudinal channel (40), through which the tab (46) extends into the longitudinal channel (40).

11. Roof carrier according to one of Claims 8 to 10, **characterized in that** the tension element (35) passes through the tab (46).

12. Roof carrier according to one of Claims 8 to 11, **characterized by** a further tab (48) which is arranged offset in the longitudinal direction with respect to the tab (46), is likewise part of the supporting foot (11) and through which the tension element (35) passes.

13. Roof carrier according to one of Claims 1 to 12, **characterized in that** the tension element (35) is a screw which is supported at its one end against the bolt (25) and at its other end against the abutment (42), wherein the imaginary extension (37) of the screw axis intersects the longitudinal member (2), which is arranged in a manner mounted on the roof, at a height (H) above the longitudinal member (2).

14. Roof carrier according to one of the preceding claims, **characterized in that** the supporting foot (11) is provided in the pivoting region of the locking section (26) with a recess (39) which is wider in the longitudinal direction of the vehicle than the locking section (26) and into which the locking section (26) can enter.

## Revendications

1. Galerie pour véhicules automobiles comprenant des montants longitudinaux agencés des deux côtés le long du toit du véhicule de façon fixe sur le toit, comprenant un montant transversal (5) s'étendant entre les montants longitudinaux (2) qui se compose d'un tube profilé (10) et de pieds de support (11) agencés à ses extrémités, étant entendu que chaque pied de support (11) est muni d'un verrou (25) monté sur celui-ci dans une articulation de traînée (23) en vue de la fixation amovible du pied de support (11) sur le montant longitudinal (2) respectif et étant entendu que le verrou (25) est réalisé avec deux bras, avec un premier bras de levier (31) à l'extrémité duquel une section de verrou (26) est réalisée, avec laquelle le verrou (25) peut être verrouillé dans une rainure (3) ouverte vers le bas du montant longitudinal (2), et avec un deuxième bras de levier (32) relié de façon rigide avec le premier bras de levier dans la zone de l'articulation de traînée (23),
**caractérisée**
**en ce qu'**un élément de traction (35) variable au niveau de sa longueur utile, qui s'étend jusqu'à une culée (42) agencée dans le tube profilé (10), agit sur le deuxième bras de levier (32).

2. Galerie selon la revendication 1, **caractérisée par** une vis (35) traversant le verrou (25) qui est destinée à faire pivoter le verrou (25) autour de l'articulation traînée (23).

3. Galerie selon la revendication 2, **caractérisée en ce que** la vis (35) destinée au verrouillage de la section de verrou (26) fonctionne en traction et **en ce que** la culée (42) de la vis (35) est agencée dans le tube profilé (10).

4. Galerie selon la revendication 1, **caractérisée en ce que** la culée (42) de l'élément de traction (35) est agencée dans un canal longitudinal (40) du tube profilé (10) de façon coulissante sur la longueur.

5. Galerie selon la revendication 4, **caractérisée par** un élément de serrage (44) agencé de façon commune avec la culée (42) dans le canal longitudinal (40) de façon coulissante sur la longueur, qui peut être comprimé contre le tube profilé (10) à la suite de la force de traction s'exerçant dans l'élément de traction (35).

6. Galerie selon la revendication 5, **caractérisée en ce que** l'élément de serrage (44) est un corps d'écrasement réalisé dans un matériau élastique, dont la section est sensiblement identique à la section intérieure du canal longitudinal (40) qui l'entoure.

7. Galerie selon la revendication 5 ou 6, **caractérisée en ce que** l'élément de traction (35) traverse l'élément de serrage (44).

8. Galerie selon l'une des revendications 5 à 7, **caractérisée en ce que** l'élément de serrage (44) est agencé de façon à pouvoir être comprimé entre la culée (42) et une bride (46) qui fait partie intégrante du pied de support (11) et s'étend transversalement au canal longitudinal (40) à l'intérieur de celui-ci.

9. Galerie selon la revendication 8, **caractérisée en ce que** le contour de la partie de la bride (46) qui fait saillie dans le canal longitudinal (40) est sensiblement identique à la section intérieure du canal longitudinal (40).

10. Galerie selon la revendication 7 ou 8, **caractérisée en ce que** le contour de la bride (46) est réalisé en forme de T et **en ce que** la largeur la plus grande du contour est plus grande que la largeur d'une ouverture (50) du canal longitudinal (40) au travers de laquelle la bride (46) s'étend à l'intérieur du canal longitudinal (40).

11. Galerie selon l'une des revendications 8 à 10, **caractérisé en ce que** l'élément de traction (35) traverse la bride (46).

12. Galerie selon l'une des revendications 8 à 11, **caractérisée par** une bride supplémentaire (48) agencée de façon décalée dans le sens longitudinal par rapport à la bride (46), qui fait également partie intégrante du pied de support (11) et qui est traversée par l'élément de traction (35).

13. Galerie selon l'une des revendications 1 à 12, **caractérisée en ce que** l'élément de traction (35) est une vis prenant appui à l'une de ses extrémités contre le verrou (25) et à son autre extrémité contre la culée (42), étant entendu que le prolongement imaginaire (37) de l'axe de la vis croise le montant longitudinal (2) agencé de façon fixe sur le toit à une hauteur (H) supérieure au montant longitudinal (2).

14. Galerie selon l'une des revendications précédentes, **caractérisée en ce que** le pied de support (11) est muni, dans la zone de pivotement de la section de verrou (26), d'un évidement (39) qui est plus large que la section de verrou (26) dans le sens longitudinal du véhicule et dans lequel la section de verrou (26) peut s'enfoncer.
